# EUROPÄISCHE PATENTANMELDUNG

(11) **EP 3 495 643 A1**
(43) Veröffentlichungstag der Anmeldung: **12.06.2019**
(21) Anmeldenummer: 17465586.0
(22) Anmeldetag: 07.12.2017
(51) Int. Cl.: F02D 9/10, F16K 1/22

(54) **DROSSELKLAPPENANORDNUNG**

(71) Anmelder: Continental Automotive GmbH, 30165 Hannover (DE)
(72) Erfinder: Albert, Eusebio-Marius, 300737 Timisoara (RO); Opre, Calin, 300576 Timisoara (RO)

(57) **Zusammenfassung**

Gegenstand der Erfindung ist eine Drosselklappenanordnung zum Absperren einer Durchströmöffnung in einem Drosselklappenstutzen 1, insbesondere für einen Brennkraftmaschine, mit einer schwenkbar antreibbaren Klappenwelle 3, die die Durchströmöffnung 2 quer zu deren Längserstreckung durchragend im Gehäuse 4 des Drosselklappenstutzens 1 gelagert ist und mit einer fest mit der Klappenwelle 3 verbundenen Drosselklappe 7, durch die die Durchströmöffnung 2 absperrbar ist. Die Klappenwelle 3 weist einen Schlitz 8 auf, in den die Drosselklappe 7 eingeschoben ist, wobei die Drosselklappe 7 mindestens mittels einer Laserschweißverbindung mit der Klappenwelle 3 fest verbunden ist.

## Beschreibung

Gegenstand der Erfindung ist eine Drosselklappenanordnung zum Absperren einer Durchströmöffnung in einem Drosselklappenstutzen, insbesondere für einen Brennkraftmaschine, mit einer schwenkbar antreibbaren Klappenwelle, die die Durchströmöffnung quer zu deren Längserstreckung durchragend im Gehäuse des Drosselklappenstutzens gelagert ist und mit einer fest mit der Klappenwelle verbundenen Drosselklappe, durch die die Durchströmöffnung absperrbar ist.

Bei derartigen Drosselklappenanordnungen ist es bekannt, in einem axialen Schlitz in der Klappenwelle die Drosselklappe einzuführen. Quer zur Drosselklappenebene sind in der Klappenwelle Bohrungen oder Gewindebohrungen angeordnet. Fluchtend zu diesen Bohrungen in der Klappenwelle sind in der Drosselklappe Ausnehmungen ausgebildet, in die Schrauben zur Befestigung der Drosselklappe eingeschraubt sind. Dieser Aufbau ist aufwendig und montageintensiv.

Darüber hinaus führen Herstellungstoleranzen von Drosselklappe, Klappenwelle, axialen Schlitz und den Bohrungen zu einem relativ großen Spiel in der Durchströmöffnung des Drosselklappenstutzens was mit einer relativ hohen Leckrate bei geschlossener Drosselklappe einhergeht.

Aufgabe der Erfindung ist es daher, eine Drosselklappenanordnung zu schaffen, die weniger Bauteile benötigt, leicht montierbar ist und eine geringere Leckrate bei geschlossener Drosselklappe aufweist.

Die Aufgabe wird erfindungsgemäß dadurch gelöst, dass die Klappenwelle einen Schlitz aufweist, in den die Drosselklappe eingeschoben ist und die Drosselklappe mindestens mittels einer Laserschweißverbindung mit der Klappenwelle fest verbunden ist.

Mit der erfindungsgemäßen Anordnung der Drosselklappe in einem Schlitz der Klappenwelle und dem Verschweißen mittels Laserschweißen, sind für die Befestigung keine weiteren Bauteile notwendig. Sie ist dadurch besonders leicht zu montieren, kostengünstig und zeichnet sich durch ein geringes Gewicht aus. Die Verwendung des Laserschweißens erlaubt zudem eine Automation der Fertigung, wodurch die Herstellung weiter verbessert wird. Im einfachsten Fall besteht die Laserschweißverbindung aus genau einer Schweißnaht zwischen Drosselklappe und Klappenwelle. Die Drosselklappenanordnung ist daher besonders schnell und kostengünstig herzustellen.

Eine größere Festigkeit der Verbindung von Drosselklappe und Klappenwelle wird dadurch erreicht, dass die Laserschweißverbindung zwei Schweißnähte umfasst, wobei jede Schweißnaht bezogen auf die andere Schweißnaht auf der gegenüberliegenden Seite der Drosselklappe und der Klappenwelle angeordnet ist. Insbesondere bei höher beanspruchten Drosselklappen ist dies von Vorteil. Diese Anordnung erlaubt das Erzeugen beider Schweißnähte durch Verschwenken der Drosselklappe ohne das die Drosselklappenanordnung um eine Achse quer zur Längserstreckung der Durchströmöffnung gedreht werden muss. Das erlaubt ebenfalls eine einfache Herstellung.

Zum Erzeugen einer ausreichend festen Verbindung der Drosselklappe mit der Klappenwelle hat es sich als vorteilhaft erwiesen, dass die Schweißnähte eine Länge besitzen, die größer als der Radius und kleiner als der Durchmesser der Durchströmöffnung ist.
In einer vorteilhaften Ausgestaltung besteht eine Schweißnaht aus einem durchgängigen Schweißnahtabschnitt oder aus mehreren zueinander mit Abstand angeordneten Schweißnahtabschnitten. Während ein durchgängiger Schweißnahtabschnitt bei höheren geforderten Festigkeiten zwischen Drosselklappe und Klappenwelle vorteilhaft ist, kann bei geringeren Belastungen eine Schweißnaht aus mehreren zueinander mit Abstand angeordneten Schweißnahtabschnitten Vorteile bringen.

Gemäß einer weiteren vorteilhaften Ausgestaltung besitzt die Klappenwelle im Bereich des Schlitzes denselben Durchmesser wie in den unmittelbar angrenzenden Bereichen der Klappenwelle. Die Welle ist dadurch besonders einfach zu fertigen. Die erfindungsgemäße Schweißverbindung führt zu keiner speziellen Ausgestaltung der Klappenwelle, so dass auch bisherige Klappenwellen verwendet werden können.

An einem Ausführungsbeispiel wird die Erfindung näher beschrieben. Es zeigen in
- Fig. 1: eine Drosselklappenanordnung in teilexplosionsartiger Darstellung,
- Fig. 2: eine Teilansicht der Drosselklappenanordnung im Bereich der Durchströmöffnung im Halbschnitt,
- Fig. 3: die Drosselklappenanordnung nach Fig. 2 mit zwei Schweißnähten und
- Fig. 4: eine Klappenwelle mit einer Drosselklappe und beispielhaften Schweißnähten.

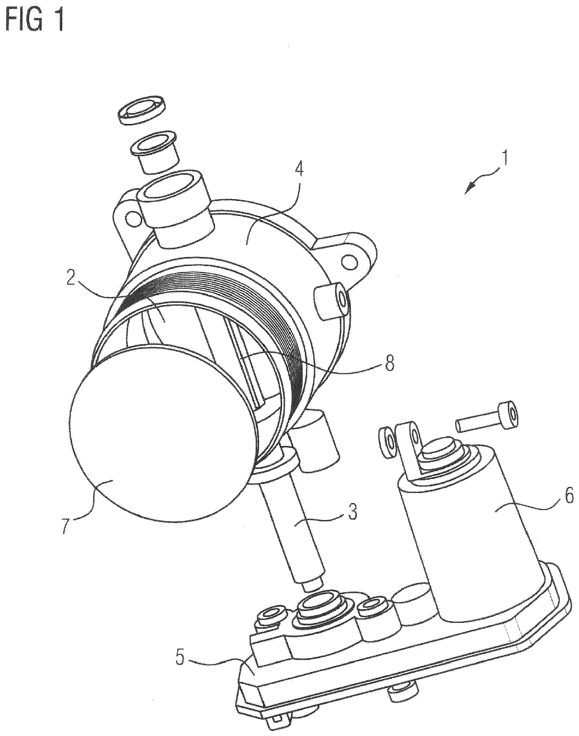

Die Drosselklappenanordnung in Figur 1 besteht aus einem Drosselklappenstutzen 1 mit der Durchströmöffnung 2. Eine schwenkbare Klappenwelle 3, die die Durchströmöffnung 2 quer zu deren Längserstreckung durchragt, ist im Gehäuse 4 des Drosselklappenstutzens 1 gelagert. Die Klappenwelle 3 ragt dabei bis in eine Getriebekammer 5, wo sie über ein nicht dargestelltes Getriebe mit einem ebenfalls nicht dargestellten Elektromotor verbunden. Der Elektromotor ist in einer Motorkammer 6 angeordnet, die einteilig mit der Getriebekammer 5 verbunden ist. Die Getriebekammer 5 ist von einem nichtdargestellten Deckel verschlossen. Über den Elektromotor ist die Klappenwelle 3 antreibbar. An der Klappenwelle 3 ist eine Drosselklappe 7 derart angeordnet, dass sie die Durchströmöffnung 2 beim Verdrehen der Klappenwelle 3 öffnet oder verschließt.

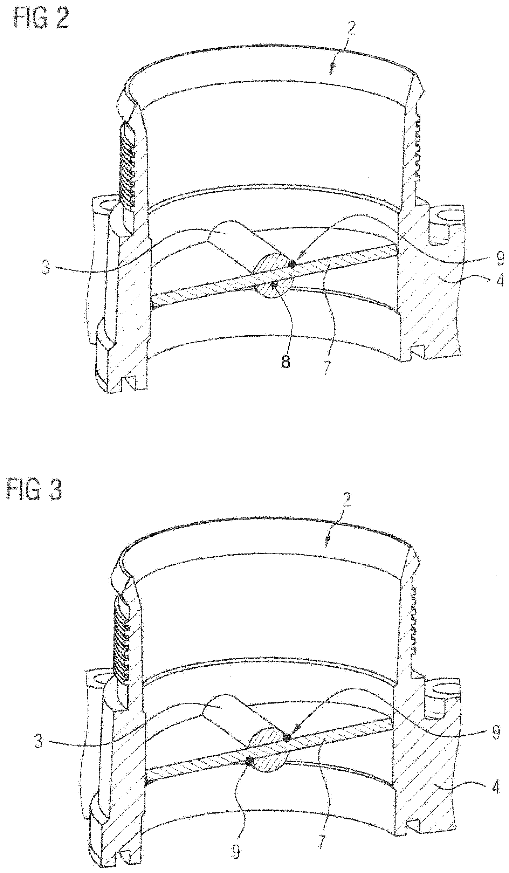

Das Gehäuse 4 mit der Durchströmöffnung 2 in Figur 2 zeigt die Klappenwelle 3 mit einem Schlitz 8, der die Klappenwelle 3 durchdringt. In diesem Schlitz 8 ist die Drosselklappe 7 angeordnet. In der gezeigten Darstellung ist die Durchströmöffnung 2 durch die Drosselklappe 7 nahezu vollständig verschlossen. Die Drosselklappe 7 ist mit einer Schweißnaht 9, die mittels Laserschweißens erzeugt wurde, mit der Klappenwelle 3 fest verbunden. Die Schweißnaht 9 besitzt eine Länge, die größer als der Radius und kleiner als der Durchmesser der Durchströmöffnung 2 ist.

Im Gegensatz zu Figur 2 ist die Drosselklappe 7 in Figur 3 mit zwei Schweißnähten 9 mit der Klappenwelle 3 verbunden. Die Schweißnähte 9 liegen dabei bezogen auf die andere jeweils andere Schweißnaht 9 auf der gegenüberliegenden Seite der Drosselklappe 7 und der Klappenwelle 3.

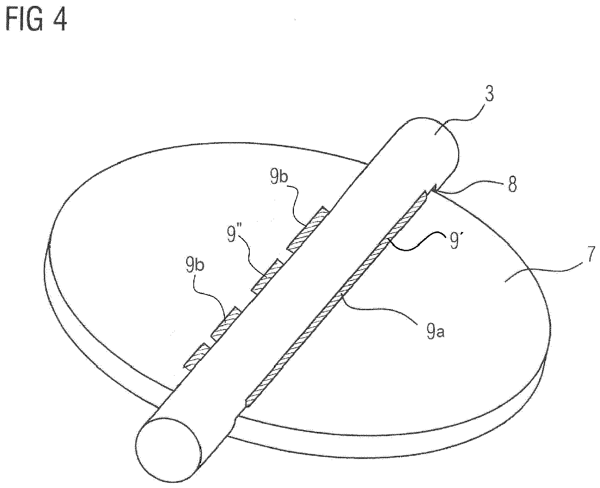

In Figur 4 sind zwei verschiedene Schweißnähte 9 zum Befestigen der Drosselklappe 7 an der Klappenwelle 3 gezeigt. Die Klappenwelle 3 besitzt dabei im Bereich des Schlitzes 8 denselben Durchmesser wie in den unmittelbar angrenzenden Bereichen der Klappenwelle 3. Die Schweißnaht 9' besteht aus einem durchgängigen Schweißnahtabschnitt 9a, während die Schweißnaht 9" von mehreren zueinander mit Abstand angeordneten Schweißnahtabschnitten 9b besteht.

## Patentansprüche

1. Drosselklappenanordnung zum Absperren einer Durchströmöffnung in einem Drosselklappenstutzen (1), insbesondere für einen Brennkraftmaschine, mit einer schwenkbar antreibbaren Klappenwelle (3), die die Durchströmöffnung (2) quer zu deren Längserstreckung durchragend im Gehäuse (4) des Drosselklappenstutzens (1) gelagert ist und mit einer fest mit der Klappenwelle (3) verbundenen Drosselklappe (7), durch die die Durchströmöffnung (2) absperrbar ist, **dadurch gekennzeichnet, dass** die Klappenwelle (3) einen Schlitz (8) aufweist, in den die Drosselklappe (7) eingeschoben ist und die Drosselklappe (7) mindestens mittels einer Laserschweißverbindung mit der Klappenwelle (3) fest verbunden ist.

2. Drosselklappenanordnung nach Anspruch 1, **dadurch gekennzeichnet, dass** die Laserschweißverbindung genau eine Schweißnaht (9) zwischen Drosselklappe (7) und Klappenwelle (3) umfasst.

3. Drosselklappenanordnung nach Anspruch 1, **dadurch gekennzeichnet, dass** die Laserschweißverbindung zwei Schweißnähte (9) umfasst, wobei jede Schweißnaht (9) bezogen auf die andere Schweißnaht (9) auf der gegenüberliegenden Seite der Drosselklappe (7) und der Klappenwelle (3) angeordnet ist.

4. Drosselklappenanordnung nach zumindest einem der Ansprüche 1 bis 3, **dadurch gekennzeichnet, dass** die Schweißnähte (9) eine Länge besitzen, die größer als der Radius und kleiner als der Durchmesser der Durchströmöffnung (2) ist.

5. Drosselklappenanordnung nach zumindest einem der vorstehenden Ansprüche, **dadurch gekennzeichnet, dass** eine Schweißnaht (9'; 9") aus einem durchgängigen Schweißnahtabschnitt (9a) oder aus mehreren zueinander mit Abstand angeordneten Schweißnahtabschnitten (9b) besteht.

6. Drosselklappenanordnung nach zumindest einem der vorstehenden Ansprüche, **dadurch gekennzeichnet, dass** die Klappenwelle (3) im Bereich des Schlitzes (8) denselben Durchmesser wie in den unmittelbar angrenzenden Bereichen der Klappenwelle (3) besitzt.
